# EUROPÄISCHE PATENTSCHRIFT

(11) **EP 3 620 318 B1**
(45) Veröffentlichungstag und Bekanntmachung des Hinweises auf die Patenterteilung: **06.01.2021**
(21) Anmeldenummer: 19194544.3
(22) Anmeldetag: 30.08.2019
(51) Int. Cl.: B60K 7/00

(54) **HYDRAULISCHE DROSSELVORRICHTUNG**
HYDRAULIC THROTTLE DEVICE
DISPOSITIF DE SOUPAPE HYDRAULIQUE

(30) Priorität: 06.09.2018 DE 102018121725
(43) Veröffentlichungstag der Anmeldung: 11.03.2020
(73) Patentinhaber: MAN Truck & Bus SE, 80995 München (DE)
(72) Erfinder: Butz, Matthias, 80637 München (DE); Beierer, Philipp, 85302 Gerolsbach (DE)
(74) Vertreter: v. Bezold & Partner Patentanwälte - PartG mbB

(56) Entgegenhaltungen:
- WO-A1-2013/092863
- DE-A1-102012 220 748
- DE-A1-102015 225 355

## Beschreibung

Die Erfindung betrifft eine hydraulische Drosselvorrichtung für ein Dichtsystem einer Drehvorrichtung, vorzugsweise für ein Dichtsystem eines hydrostatischen Radnabenmotors, wobei die Drehvorrichtung ein erstes und ein zweites Bauteil umfasst, die um eine Drehachse relativ zueinander verdrehbar sind. Die Erfindung betrifft ferner einen hydrostatischen Radnabenmotor und ein Kraftfahrzeug mit einer solchen Drosselvorrichtung.

Es ist aus dem Stand der Technik bekannt, die von einem zentralen Antriebsmotor eines Fahrzeugs nicht-angetriebene Achse mit hydrostatischen Radnabenmotoren auszustatten, um die nicht-angetriebenen Achse bei Bedarf für mehr Traktion in eine angetriebene Achse zu verwandeln, wobei lediglich beispielhaft auf die Offenlegungsschriften EP 2 559 581 A2 und EP 1 886 861 A2 verwiesen wird.

Der Stator der Radnabenmotoren wird dazu üblicherweise mit dem Achsstummel und der Rotor mit der Radnabe verschraubt. Dadurch entsteht ein Druckraum (auch Steuerraum genannt) zwischen Radnabenmotor, Achsstummel und Radnabe. Da sich die Radnabe im Betrieb dreht und die Radlager vor Umwelteinflüssen geschützt werden müssen, kommen des Weiteren ein Dichtsystem bzw. eine Dichtvorrichtung zum Einsatz, die sich üblicherweise zwischen dem Achsschenkel und dem der Fahrzeugmitte zugewandten Radlager befindet. Durch die hohen entstehenden Drücke, muss daher eine zusätzliche Drossel oder Dichtung gegen hohe Drücke aufgebracht werden, damit diese Dichtvorrichtung nicht durch den Druck aus der Nabe gedrückt wird.

Nach dem Stand der Technik sind verschiedene Dichtungen oder Drosseln bekannt, die in derartigen Systemen zum Einsatz kommen. Wie aus der Offenlegungsschrift DE 10 2012 220 748 A1 bekannt ist, können sogenannte Spaltdrosseln eingesetzt werden, die drehfest mit der Radnabe verbunden sind und mit einer Gegenfläche (z.B. Achsstummel) eine kontaktlose Verjüngung des Strömungsquerschnitts erzeugen. Je nach Länge und Größe des verjüngten Querschnitts kann ein Druckabfall erzeugt werden, sodass der resultierende Druck hinter dieser Drossel gering genug ist, damit eine konventionelle Dichtung nicht beschädigt wird. Des Weiteren sind nach den Offenlegungsschriften WO 2011/040843 A1 und WO 2013/068377 A2 Dichtungen bekannt, die vor einer fettgeschmierten Lagereinheit angebracht werden können, und damit überhaupt keine Strömung in Richtung der Lagereinheit bzw. der weiteren Lagerdichtungen zulassen. Diese aus dem Stand der Technik bekannten Lösungsansätze haben jedoch Nachteile.

So weisen hydraulische Dichtvorrichtungen nach WO 2011/040843 A1 und WO 2013/068377 A2 den Nachteil auf, dass sie auch hohe Druckspitzen komplett abfangen müssen, da keine Hydraulikflüssigkeit in die fettgeschmierte Lagereinheit vordringen darf. Dazu werden diese Systeme mehrteilig ausgeführt, damit sie einfach montierbar bleiben und die hohen Anforderungen an Dichtungen und deren Gegenlaufflächen erfüllen.

Die deutlich einfacheren Drosselringe, wie aus der DE 10 2012 220 748 A1 bekannt, weisen jedoch den Nachteil auf, dass sie bei einem Druckunterschied vor und hinter der Drossel einen Volumenstrom durch die Drossel, bestehend aus Drosselring und Gegenfläche, erzeugen. Im Rahmen der Erfindung wurde festgestellt, dass die Gefahr besteht, dass kleinste Fremdkörper in der Hydraulikflüssigkeit in den Drosselspalt gezogen werden und durch die Relativbewegung beider Komponenten zueinander die Drosselflächen beschädigen, da sich die beiden Elemente der Drossel auch relativ zueinander drehen.

Es ist somit eine Aufgabe der Erfindung, eine verbesserte Drosselvorrichtung bereitzustellen, bei der kleinste Fremdkörper keine Beschädigung der Drossel verursachen oder zumindest das Risiko für derartige Beschädigungen reduziert ist.

Diese Aufgabe wird durch eine Drosselvorrichtung mit den Merkmalen des unabhängigen Anspruchs gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Gemäß einem allgemeinen Gesichtspunkt der Erfindung wird eine hydraulische Drosselvorrichtung bereitgestellt, vorzugsweise eine Drosselvorrichtung für ein Dichtsystem einer Drehvorrichtung, wobei die Drehvorrichtung ein erstes und ein zweites Bauteil umfasst, die um eine Drehachse D relativ zueinander verdrehbar sind. Das Dichtsystem kann ein Dichtsystem für eine Maschine zur Abdichtung einer Welle zwischen einem ersten mit einem ersten Fluid, insbesondere eine Flüssigkeit, z. B. Öl, gefüllten Raum und einem zweiten mit einem zweiten Fluid, z. B. Luft, gefüllten Raum sein, wobei das erste Fluid in dem ersten Raum einen größeren Druck aufweist als das zweite Fluid in dem zweiten Raum. Das Dichtsystem kann beispielsweise ein Dichtsystem eines Radteils mit hydrostatischem Radnabenmotor oder ein Dichtsystem eines hydrostatischen Radnabenmotors sein.

Die hydraulische Drosselvorrichtung umfasst eine an dem ersten Bauteil drehfest angeordnete hydraulische Drosseleinrichtung. Die Drosseleinrichtung weist einen Drosselspalt auf, dessen - in Radialrichtung R der Drehachse D gesehen - untere Wandung und obere Wandung zueinander drehfest angeordnet sind und durch die Drosseleinrichtung gebildet sind. Die Drosseleinrichtung kann somit auch als Spaltdrossel bezeichnet werden. Die hydraulische Drosselvorrichtung umfasst ferner mindestens eine Rotationsdichtung, die die Drosseleinrichtung gegenüber dem relativ zur Drosseleinrichtung verdrehbaren zweiten Bauteil der Drehvorrichtung abdichtet.

Mit anderen Worten wird der Drosselspalt in Radialrichtung sowohl oben als auch unten durch eine Wand oder Begrenzungsfläche begrenzt, die durch die Drosseleinrichtung gebildet ist. Der Drosselspalt wird daher nicht von einer Außenseite eines sich zum Drosselspalt drehenden Bauteils, z. B. einer Welle begrenzt. Die Bauteile der durchströmten Spaltdrossel bewegen sich dabei zueinander nicht. Ein besonderer Vorzug der Erfindung liegt somit darin, dass Beschädigungen des Drosselspalts durch Durchströmung mit Fremdpartikeln während der Drehbewegung verhindert oder zumindest wirksam reduziert werden können, da sich die beiden gegenüberliegenden Wandungen (Randflächen) des Drosselspaltes nicht relativ zueinander drehen und somit auch kein Drehbewegung vorliegt, die kleinste Fremdkörper in der Hydraulikflüssigkeit in den Drosselspalt (zusätzlich) ziehen würde.

Die drehende Drosselvorrichtung der Drehvorrichtung, z. B. in einem Radteil mit hydrostatischen Motor, ist somit funktional aufgeteilt in eine Drossel- und eine Dichtkomponente. Die Drosseleinrichtung dient dabei nur als Drossel, nicht als Abdichtung zum rotierenden Bauteil, während die Rotationsdichtung ihrerseits keine Drosselfunktion hat. Die Rotationsdichtung ermöglicht daher dennoch eine Drehbewegung des Radteils, verhindert aber eine Strömung zwischen rotierenden Komponenten.

Der Drosselspalt ist vorzugsweise ein fester, starrer Spalt. Die Wandung des Drosselspalts ist vorzugsweise aus einem nicht-elastischem Material, weiter vorzugsweise aus einem metallischen Werkstoff.

Der Drosselspalt ist vorzugsweise ein fester, starrer Spalt. Die Wandung des Drosselspalts ist vorzugsweise aus einem nicht-elastischem Material, weiter vorzugsweise aus einem metallischen Werkstoff.

Das Dichtsystem kann typischerweise in Axialrichtung vor und hinter der hydraulischen Drosselvorrichtung jeweils eine Abdichtung aufweisen, angeordnet zwischen einem Achsschenkel und einem Radlager, nämlich eine innere Dichtung, die einem hohem hydraulischen Druck ausgesetzt ist und eine äußere, gegen die Umwelt abdichtende Dichtung, die einem niedrigerem Druck ausgesetzt ist, da das auf die äußere Dichtung auftreffende Flüssigkeit zuvor durch den Drosselspalt der Drosselvorrichtung fließen muss.

Gemäß einer besonders bevorzugten Ausführungsform weist die Drosseleinrichtung zwei zueinander drehfest und koaxial zu der Drehachse angeordneten Komponenten auf. Hierbei ist die obere Wandung des Drosselspalts durch eine erste Außenfläche der ersten Komponente und die untere Wandung durch eine zweite, zur ersten Außenfläche in Radialrichtung beabstandete Außenfläche der zweiten Komponenten gebildet. Eine solche Ausführung mit zwei Komponenten erlaubt eine herstellungstechnisch präzise Herstellung des Drosselspalts. Eine 1-komponentige Ausführung der Drosseleinrichtung ist auch möglich, jedoch müsste dann der Drosselspalt beispielsweise gebohrt werden, was herstellungstechnisch weniger vorteilhaft ist.

Gemäß einem weiteren Aspekt dieser Ausführungsform besteht die Möglichkeit, dass die zwei Komponenten der Drosseleinrichtung ringförmig ausgebildet sind, vorzugsweise als konzentrisch angeordnete Metallringe ausgebildet sind. Ferner kann der Drosselspalt als starrer Ringspalt oder starrer Teilringspalt ausgebildet sein. Die zwei Komponenten der Drosseleinrichtung können vorzugsweise zueinander konzentrisch angeordnete und/oder starre Komponenten sein.

Gemäß einem weiteren Aspekt können die zwei Komponenten der Drosseleinrichtung mittels einer Presspassung miteinander drehfest verbunden sein. Dies ermöglicht wiederum ein herstellungstechnisch zuverlässiges und kostengünstiges drehfestes Verbinden der beiden Komponenten. Alternativ oder zusätzlich kann zur Ausbildung der Verdrehsicherung zwischen der ersten und zweiten Komponente die erste Komponente der Drosseleinrichtung über einen an die erste Außenfläche in Axialrichtung A angeformten Vorsprung, vorzugsweise eine Klemmnase, in eine Nut, die an die zweite Außenfläche der zweiten Komponente in Axialrichtung A angeformt ist, eingreifen. Die Presspassung und/oder die Kombination aus Vorsprung und Nut können gleichzeitig als Begrenzung dienen, um einen ersten Ableitungskanal auszubilden, über den die aus dem Drosselspalt heraustretende Flüssigkeit abgeleitet werden kann.

Ferner ist es vorteilhaft, die Verdrehsicherung zur Ausbildung der Drehsicherung zwischen den beiden Komponenten in mindestens einem an den Drosselspalt angrenzenden Bereich auszusetzen, zur Ausbildung eines zweiten Ableitungskanals zum Ableiten des Fluides aus dem Drosselspalt und aus dem ersten Ableitungskanal.

Gemäß einer weiteren Ausführungsform kann die Rotationsdichtung in Radialrichtung zwischen der Drosseleinrichtung und dem zweiten Bauteil angeordnet sein. Ferner kann die Rotationsdichtung als Radialdichtring oder als Anordnung mehrerer Radialdichtringe ausgebildet sein.

Gemäß einem weiteren Aspekt kann die Drosseleinrichtung mittels einer Verdrehsicherung, beispielsweise in Form eines zusätzlichen Bauteils, wie einer stiftförmigen Verdrehsicherung, drehfest am ersten Bauteil angeordnet sein. Ferner kann die Drosseleinrichtung mittels einer zwischen Drosseleinrichtung und ersten Bauteil angeordneten Dichtung zum ersten Bauteil hin abgedichtet sein, wobei die Dichtung beispielsweise ein Dichtring sein kann.

Es sind unterschiedliche Anordnungsvarianten der Drosseleinrichtung und der Rotationsdichtung in Radialrichtung möglich. Gemäß einer ersten Variante kann das erste Bauteil eine Radnabe oder ein drehfest an der Radnabe befestigtes Bauteil sein und das zweite Bauteil kann ein Achsstummel oder ein drehfest am Achsstummel befestigtes Bauteil, vorzugsweise ein Dichtmittelträger des Achsstummels, sein. Gemäß einer zweiten Variante kann das zweite Bauteil eine Radnabe oder ein drehfest an der Radnabe befestigtes Bauteil sein und das erste Bauteil kann ein Achsstummel oder ein drehfest am Achsstummel befestigtes Bauteil, vorzugsweise ein Dichtmittelträger des Achsstummels, sein.

Gemäß einem weiteren Aspekt betrifft die Erfindung ferner ein Dichtsystem, einen hydrostatischen Radnabenmotor und/oder ein Kraftfahrzeug, jeweils umfassend eine hydraulische Drosselvorrichtung, wie in diesem Dokument beschrieben. Das Kraftfahrzeug ist vorzugsweise ein Nutzfahrzeug, wie beispielsweise ein Lastkraftwagen oder Omnibus.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: einen Teilansicht im Schnitt einer Drehvorrichtung mit einer hydraulischen Drosselvorrichtung gemäß einer Ausführungsform der Erfindung;
- Figur 2: eine perspektivische Ansicht der Drosselvorrichtung gemäß einer Ausführungsform der Erfindung;
- Figur 3: eine Teilansicht im Schnitt der Drosselvorrichtung gemäß einer Ausführungsform der Erfindung;
- Figur 4: einen Schnittansicht einer hydraulischen Drosselvorrichtung gemäß einer weiteren Ausführungsform der Erfindung; und
- Figur 5: einen Schnittansicht einer Drehvorrichtung mit Dichtsystem, das eine hydraulische Drosselvorrichtung gemäß einer Ausführungsform der Erfindung umfasst.

Gleiche oder äquivalente Elemente sind in allen Figuren mit denselben Bezugszeichen bezeichnet und zum Teil nicht gesondert beschrieben.

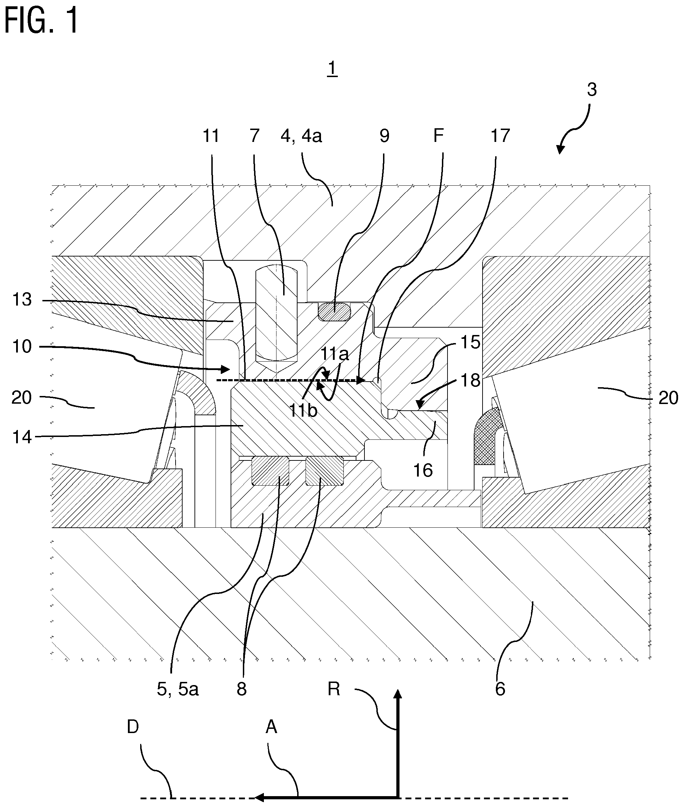

In Figur 1 ist ein Längsschnitt einer Drehvorrichtung 3 für ein Dichtsystem mit einer hydraulischen Drosselvorrichtung 1 gemäß einer Ausführungsform der Erfindung dargestellt. Die Drehvorrichtung 3 umfasst ein erstes und ein zweites Bauteil, die um eine Drehachse D relativ zueinander verdrehbar sind. Vorliegend handelt es sich bei der hydraulischen Drosselvorrichtung um eine hydraulische Drosselvorrichtung 1 für einen hydrostatischen Radnabenmotor. Entsprechend umfasst die Drehvorrichtung 3 einen Achsstummel 6 eines Fahrzeugs mit einem hieran befestigten Dichtmittelträger 5a und eine Radnabe 4a, die sich relativ zum Achsstummel 6 und zum Dichtmittelträger 5a dreht. Figur 1 zeigt jeweils nur einen Teilausschnitt von Achsstummel 6 und Radnabe 5. Figur 1 zeigt nur eine Teilansicht der Drehvorrichtung 3 und zwar desjenigen Teils, der oberhalb der Drehachse D liegt. Der unterhalb der Drehachse D liegende Teil ist entsprechend analog aufgebaut. Die Drehachse ist durch die gestrichelte Linie D illustriert; die Axialrichtung ist mit dem Bezugszeichen A und die Radialrichtung ist mit dem Bezugszeichen R gekennzeichnet.

Die hydraulische Drosselvorrichtung 1 umfasst eine an dem ersten Bauteil 4, das in dem Ausführungsbeispiel der Figur 1 der Radnabe 4a entspricht, drehfest angeordnete hydraulische Drosseleinrichtung 10. Die Drosselreinrichtung weist einen Drosselspalt 11 auf, dessen - in Radialrichtung R der Drehachse D gesehen - untere 11a und obere 11b Wandung zueinander drehfest angeordnet und durch die Drosseleinrichtung 10 gebildet sind.

Die Drosseleinrichtung 10 wird dabei gebildet durch zwei zueinander drehfest, koaxial und konzentrisch zu der Drehachse D angeordnete Metallringe 13, 14. Hierbei wird die obere Wandung 11b des Drosselspalts 11 durch eine radial innenliegende Umfangsfläche des in Radialrichtung R äußeren Metallringes 13 und die untere Wandung 11a des Drosselspalts 11 durch eine radial außenliegende Umfangsfläche des in Radialrichtung R inneren Metallrings 14 gebildet. Der Drosselspalt 11 bildet einen engen starren Durchflusskanal in Form eines Ringspaltes aus, durch den Flüssigkeit des hydrostatischen Radnabenmotors im Druckraum in Figur 1 von links nach rechts strömen kann, wie es durch den Pfeil F, der den Fluiddurchfluss durch den Drosselspalt 11 darstellt, illustriert ist. Der Drosselspalt ist somit ein fester, starrer Spalt und die Wandung des Drosselspalts ist gemäß dem Ausführungsbeispiel aus einem nicht-elastischem Material, hier aus einem metallischen Werkstoff.

Die beiden Komponenten 13, 14 der Drosseleinrichtung sind an einer Kontaktfläche (Auflagefläche) 18 mittels einer Presspassung miteinander drehfest verbunden. Zur Ausbildung der Verdrehsicherung weist einer der Metallringe 13 einen in Axialrichtung A angeformten Vorsprung in Form einer Klemmnase 15 auf, die eine Nut 16 des anderen Metallrings 14 eingepresst ist.

Die Drosselvorrichtung 1 umfasst ferner mindestens eine Rotationsdichtung 8, die die Drosseleinrichtung 10 gegenüber dem relativ zur Drosseleinrichtung 10 verdrehbaren zweiten Bauteil 5 der Drehvorrichtung 3, hier dem Dichtmittelträger 5a, abdichtet. Die Rotationsdichtung 8 ist in Radialrichtung zwischen der Drosseleinrichtung 10 und dem sich relativ hierzu drehenden Bauteil, d. h. dem Dichtmittelträger 5a, angeordnet. Die Rotationsdichtung 8 umfasst in dem in Figur 1 gezeigten Ausführungsbeispiel eine Anordnung aus zwei Radialdichtringen 8, die in Axialrichtung A zueinander versetzt angeordnet sind.

Die Drosseleinrichtung 10 ist mittels einer stiftförmigen Verdrehsicherung 7 drehfest an der Radnabe 4a angeordnet und mittels einer zwischen Drosseleinrichtung 10 und Radnabe 4a angeordneten Dichtung 9, z. B. in Form eines Dichtrings, zur Radnabe 4a hin abgedichtet.

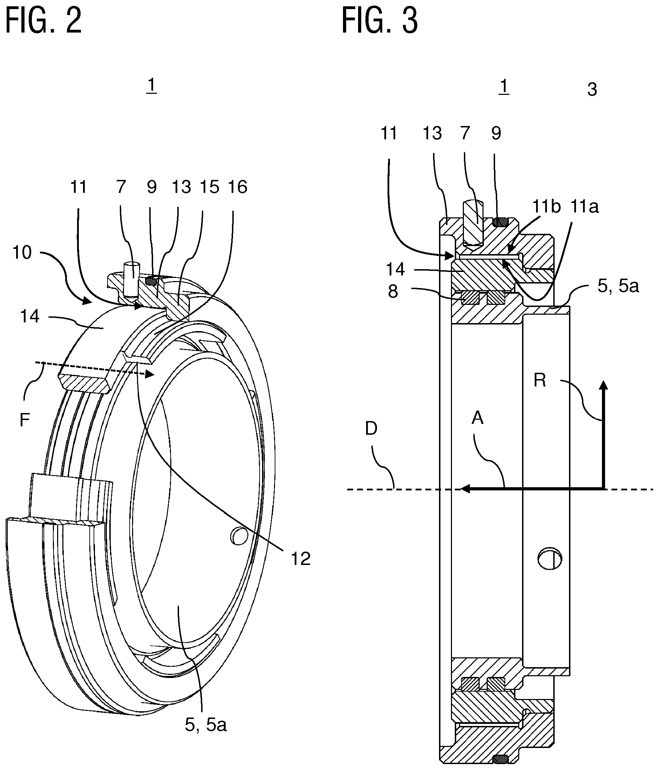

Am Ende des Drosselspalts 11 weist die Drosseleinrichtung ein Freistück 17 auf, die in Umfangsrichtung der Ringe 13, 14 einen Ablaufkanal bilden, über den die aus dem Drosselspalt 11 austretende Flüssigkeit abließen kann, bis zur einer Aussetzstelle, an der die Verdrehsicherung zur Ausbildung der Drehsicherung zwischen den beiden Komponenten 13, 14 der Drosseleinrichtung 10 ausgesetzt ist, zur Ausbildung eines weiteren Ableitungskanals zum Ableiten des Fluides. Diese Merkmale sind ferner in den Ansichten der Drosselvorrichtung 1 der Figuren 2 und 3 gut erkennbar.

Wie vorstehend bereits dargelegt wurde, wird somit der Drosselspalt 11 in Radialrichtung sowohl oben als auch unten durch eine Wand oder Begrenzungsfläche begrenzt, die durch die Drosseleinrichtung 10, insbesondere durch eine Außenfläche der starren Metallringe 13, 14 gebildet ist. Der Drosselspalt wird daher nicht von einer Außenseite eines sich zum Drosselspalt drehenden Bauteils, z. B. einer Welle begrenzt. Die Bauteile der durchströmten Spaltdrossel bewegen sich daher zueinander nicht, d.h. die beiden gegenüberliegenden Wandungen (Randflächen) 11a, 11b des Drosselspaltes 11 drehen sich nicht relativ zueinander, so dass keine Drehbewegung vorliegt, die kleinste Fremdkörper in der Hydraulikflüssigkeit in den Drosselspalt (zusätzlich) ziehen würde. Entsprechend können Beschädigungen des Drosselspalts 11 durch Durchströmung mit Fremdpartikeln während der Drehbewegung der Drehvorrichtung 3 verhindert oder zumindest wirksam reduziert werden. Die drehende Drosselvorrichtung der Drehvorrichtung, z. B. in einem Radteil mit hydrostatischen Motor, ist somit funktional aufgeteilt in eine Drosselkomponente, d.h. die Drosseleinrichtung 10, und eine Dichtkomponente, d.h. die Rotationsdichtung 8. Die Drosseleinrichtung 10 dient dabei nur als Drossel, nicht als Abdichtung zum rotierenden Bauteil, während die Rotationsdichtung ihrerseits keine Drosselfunktion hat. Die Rotationsdichtung ermöglicht daher dennoch eine Drehbewegung des Radteils, verhindert aber eine Strömung zwischen rotierenden Komponenten.

Das Dichtsystem kann typischerweise in Axialrichtung vor und hinter der hydraulischen Drosselvorrichtung jeweils eine Abdichtung aufweisen, angeordnet zwischen einem Achsschenkel und einem Radlager, nämlich eine innere Dichtung, die einem hohem hydraulischen Druck ausgesetzt ist und eine äußere, gegen die Umwelt abdichtende Dichtung, die einem niedrigerem Druck ausgesetzt ist, da das auf die äußere Dichtung auftreffende Flüssigkeit zuvor durch den Drosselspalt der Drosselvorrichtung fließen muss. Hierdurch wird der Druckraum (Steuerraum des hydrostatischen Radnabenmotors) abgedichtet.

In Figur 1 sind ferner zwei Radlager 20 erkennbar. Das in Figur 1 links gezeigte Radlager 20 ist einem hohem Druck ausgesetzt, wohingegen das rechts gezeigte Radlager 20 einer hierzu geringerem Druck ausgesetzt ist, das Flüssigkeit, die auf das rechte Radlager 20 trifft, durch den Drosselspalt 11 gedrosselt wurde.

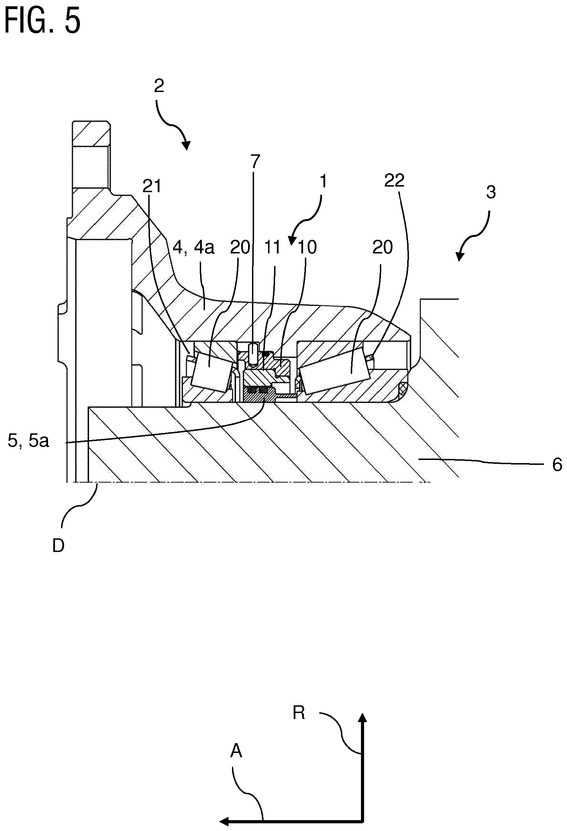

Die eigentliche Abdichtung des Dichtsystems erfolgt mittels zweier in Axialrichtung vor und hinter der hydraulischen Drosselvorrichtung 1 vorgesehenen Abdichtungen, angeordnet zwischen einem Achsschenkel 6 und einem Radlager 20, die in dem Ausschnitt der Figur 1 nicht mehr dargestellt sind. Diese Abdichtungen 21, 22 sind jedoch in Figur 5 erkennbar.

Figur 5 zeigt eine Schnittansicht einer Drehvorrichtung 3 mit Dichtsystem 2, das eine hydraulische Drosselvorrichtung 1 eines hydrostatischen Radnabenmotors gemäß einer Ausführungsform der Erfindung zeigt. Die Abdichtungen umfassen insbesondere ein eine innere Dichtung 21, die einem hohem hydraulischen Druck ausgesetzt ist und eine äußere, gegen die Umwelt abdichtende Dichtung 22, die einem niedrigerem Druck ausgesetzt ist, da die auf die äußere Dichtung auftreffende Flüssigkeit zuvor durch den Drosselspalt der Drosselvorrichtung fließen muss.

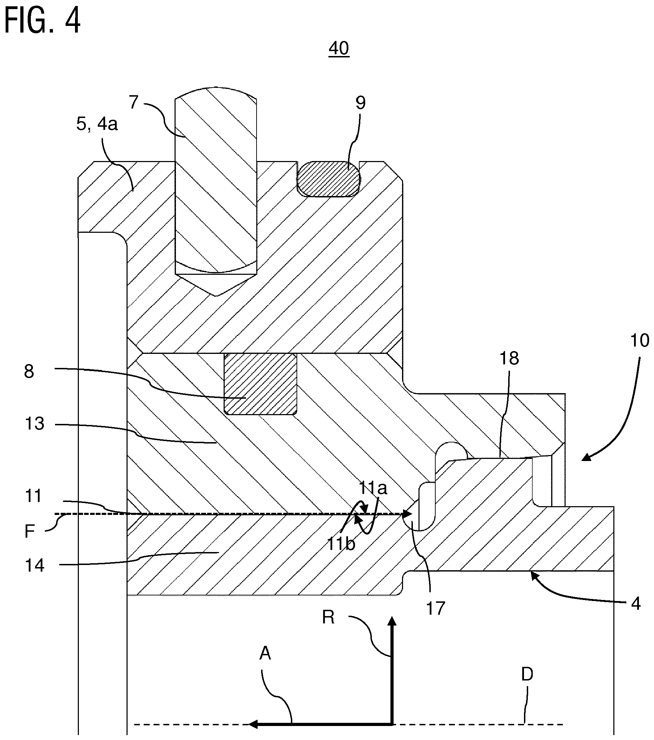

Figur 4 zeigt eine Schnittansicht einer hydraulischen Drosselvorrichtung 40 gemäß einer weiteren Ausführungsform der Erfindung. Die Besonderheit dieser Ausführungsvariante liegt lediglich darin, dass die Reihenfolge in Radialrichtung R von Drosseleinrichtung 10 und Rotationsdichtung 8 vertauscht sind. Entsprechend ist die Drosseleinrichtung 40 am Achsstummel 6 oder an einem Bauteil, das drehfest am Achsstummel 6 befestigt ist, drehfest angeordnet. Der Aufbau der Drosseleinrichtung 40 mit den beiden konzentrisch, koaxial und drehfest zueinander angeordneten Metallringen 13, 14, die einen Drosselspalt 11 zwischen sich ausbilden, ist ansonsten entsprechend wie sie zuvor für das vorherige Ausführungsbeispiel beschrieben wurde. Der Metallring 14 der Drosseleinrichtung 10, der benachbart zum sich relativ zur Drosseleinrichtung drehenden Bauteil 5, 4a angeordnet ist, weist eine Aufnahmenut auf, in der eine Rotationsdichtung 8 drehfest gehaltert ist. Die Rotationsdichtung 8 dichtet die Drosseleinrichtung 10 gegenüber ein sich relativ hierzu drehenden Bauteil 5 ab, das wiederum über eine Verdrehsicherung 7 und eine Dichtung 9 drehfest an einem weiteren Bauteil befestigt ist.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

### Bezugszeichenliste

- 1: Hydraulische Drosselvorrichtung
- 2: Dichtsystem eines hydrostatischen Radnabenmotors
- 3: Drehvorrichtung
- 4: Drehfest zur Drosseleinrichtung angeordnetes Bauteil
- 4a: Radnabe
- 5: Relativ zur Drosseleinrichtung drehendes Bauteil
- 5a: Dichtmittelträger
- 6: Achsstummel
- 7: Verdrehsicherung
- 8: Rotationsdichtung, vorzugsweise Radialdichtring
- 9: Dichtring
- 10: Hydraulische Drosseleinrichtung
- 11: Drosselspalt
- 11a: Untere Wandung des Drosselspalts
- 11b: Obere Wandung des Drosselspalts
- 12: Freistück
- 13: Ring
- 14: Ring
- 15: Klemmnase
- 16: Nut
- 17: Ablaufkanal
- 18: Kontaktfläche
- 20: Radlager
- 21: Innere Dichtung
- 22: Äußere Dichtung
- 40: Hydraulische Drosselvorrichtung
- A: Axialrichtung
- R: Radialrichtung
- D: Drehachse
- F: Fluiddurchfluss

## Patentansprüche

1. Hydraulische Drosselvorrichtung (1; 40) für ein Dichtsystem (2) einer Drehvorrichtung (3), vorzugsweise für ein Dichtsystem eines Radteils (3) mit hydrostatischem Radnabenmotor, wobei die Drehvorrichtung (3) ein erstes und ein zweites Bauteil (4, 5) umfasst, die um eine Drehachse (D) relativ zueinander verdrehbar sind, umfassend
eine an dem ersten Bauteil (4) drehfest angeordnete hydraulische Drosseleinrichtung (10), aufweisend einen Drosselspalt (11), dessen - in Radialrichtung (R) der Drehachse (D) gesehen - untere (11a) und obere (11b) Wandung zueinander drehfest angeordnet und durch die Drosseleinrichtung (10) gebildet sind; und
mindestens eine Rotationsdichtung (8), die die Drosseleinrichtung (10) gegenüber dem relativ zur Drosseleinrichtung (10) verdrehbaren zweiten Bauteil (5) der Drehvorrichtung (3) abdichtet.

2. Hydraulische Drosselvorrichtung (1; 40) nach Anspruch 1, wobei die Drosseleinrichtung (10) zwei zueinander drehfest und koaxial zu der Drehachse angeordneten Komponenten (13, 14) aufweist und die obere Wandung (11b) des Drosselspalts (11) durch eine erste Außenfläche der ersten Komponente (13) und die untere Wandung (11a) durch eine zweite, zur ersten Außenfläche in Radialrichtung beabstandete Außenfläche der zweiten Komponente (14) gebildet sind.

3. Hydraulische Drosselvorrichtung (1; 40) nach Anspruch 2,
a) wobei die zwei Komponenten (13, 14) der Drosseleinrichtung (10) ringförmig ausgebildet sind, vorzugsweise als konzentrisch angeordnete Metallringe ausgebildet sind; und/oder
b) wobei der Drosselspalt (11) als starrer Ringspalt oder starrer Teilringspalt ausgebildet ist.

4. Hydraulische Drosselvorrichtung (1, 40) nach Anspruch 2 oder 3,
a) wobei die zwei Komponenten (13, 14) der Drosseleinrichtung mittels einer Presspassung miteinander drehfest verbunden sind; und/oder
b) wobei zur Ausbildung der Verdrehsicherung zwischen der ersten und zweiten Komponente (13, 14) die erste Komponente (13) der Drosseleinrichtung (10) über einen an die ersten Außenfläche in Axialrichtung (A) angeformten Vorsprung, vorzugsweise eine Klemmnase (15), in eine Nut (16), die an die zweite Außenfläche der zweiten Komponente (14) in Axialrichtung (A) angeformt ist, eingreift.

5. Hydraulische Drosselvorrichtung (1; 40) nach einem der Ansprüche 2 bis 4, wobei eine Verdrehsicherung zur Ausbildung der Drehsicherung zwischen den beiden Komponenten der Drosseleinrichtung (10) in mindestens einem an den Drosselspalt angrenzenden Bereich ausgesetzt ist, zur Ausbildung eines Ableitungskanals zum Ableiten von Fluid.

6. Hydraulische Drosselvorrichtung nach einem der vorhergehenden Ansprüche, wobei die Rotationsdichtung (8) in Radialrichtung zwischen der Drosseleinrichtung (10) und dem zweiten Bauteil (5) angeordnet ist.

7. Hydraulische Drosselvorrichtung (1; 40) nach einem der vorhergehenden Ansprüche, wobei die Rotationsdichtung (8) als Radialdichtring oder als Anordnung mehrerer Radialdichtringe ausgebildet ist.

8. Hydraulische Drosselvorrichtung (1; 40) nach einem der vorhergehenden Ansprüche, wobei die Drosseleinrichtung (10)
a) mittels einer Verdrehsicherung (7) drehfest am ersten Bauteil (4) angeordnet ist; und/oder
b) mittels einer zwischen Drosseleinrichtung (10) und ersten Bauteil (4) angeordneten Dichtung (9) zum ersten Bauteil (4) hin abgedichtet ist, wobei die Dichtung vorzugsweise ein Dichtring ist.

9. Hydraulische Drosselvorrichtung (1; 40) nach einem der vorhergehenden Ansprüche, wobei
a) das erste Bauteil (4) eine Radnabe (4a) oder ein drehfest an der Radnabe befestigtes Bauteil und das zweite Bauteil (5) ein Achsstummel oder ein drehfest am Achsstummel befestigtes Bauteil, vorzugsweise ein Dichtmittelträger (5a) des Achsstummels (6), ist; oder
b) das zweite Bauteil (5) eine Radnabe (4a) oder ein drehfest an der Radnabe befestigtes Bauteil und das erste Bauteil (4) ein Achsstummel oder ein drehfest am Achsstummel befestigtes Bauteil, vorzugsweise ein Dichtmittelträger (5a) des Achsstummels (6), ist.

10. Hydraulische Drosselvorrichtung (1; 40) nach einem der vorhergehenden Ansprüche, wobei
a) der Drosselspalt als fester und/oder starrer Spalt ausgebildet ist; und/oder
b) die Wandung des Drosselspalt aus einem nicht-elastischem Material, beispielsweise aus einem metallischen Werkstoff gebildet ist.

11. Hydrostatischer Radnabenmotor, umfassend eine hydraulische Drosselvorrichtung (1; 40) nach einem der vorhergehenden Ansprüche.

12. Kraftfahrzeug, vorzugsweise Nutzfahrzeug, umfassend eine hydraulische Drosselvorrichtung (1; 40) nach einem der vorhergehenden Ansprüche.

## Claims

1. A hydraulic throttle apparatus (1; 40) for a sealing system (2) of a rotational apparatus (3), preferably for a sealing system of a wheel part (3) with a hydrostatic wheel hub motor, the rotational apparatus (3) comprising a first and a second component (4, 5) which can be rotated about a rotational axis (D) relative to one another, comprising
a hydraulic throttle device (10) which is arranged fixedly on the first component (4) so as to rotate with it, having a throttle gap (11), the lower (11a) and upper (11b) wall of which, as viewed in the radial direction (R) of the rotational axis (D), are arranged fixedly with respect to one another for conjoint rotation and are formed by way of the throttle device (10); and
at least one rotary seal (8) which seals the throttle device (10) with respect to the second component (5) of the rotational apparatus (3), which second component (5) can be rotated relative to the throttle device (10).

2. The hydraulic throttle apparatus (1; 40) according to Claim 1, the throttle device (10) having two components (13, 14) which are arranged fixedly with respect to one another for conjoint rotation and coaxially with respect to the rotational axis, and the upper wall (11b) of the throttle gap (11) being formed by way of a first outer face of the first component (13) and the lower wall (11a) being formed by way of a second outer face of the second component (14), which second outer face is spaced apart from the first outer face in the radial direction.

3. The hydraulic throttle apparatus (1; 40) according to Claim 2,
a) the two components (13, 14) of the throttle device (10) being of annular configuration, preferably being configured as concentrically arranged metal rings; and/or
b) the throttle gap (11) being configured as a rigid annular gap or as a rigid part annular gap.

4. The hydraulic throttle apparatus (1, 40) according to Claim 2 or 3,
a) the two components (13, 14) of the throttle device being connected fixedly to one another for conjoint rotation by means of a press fit; and/or
b) the first component (13) of the throttle device (10) engaging, in order to configure the anti-rotation safeguard between the first and second component (13, 14), via a projection, preferably a clamping lug (15), which is integrally formed on the first outer face in the axial direction (A) into a groove (16) which is integrally formed on the second outer face of the second component (14) in the axial direction (A).

5. The hydraulic throttle apparatus (1; 40) according to one of Claims 2 to 4, an anti-rotation safeguard for configuring the anti-rotation locking action between the two components of the throttle device (10) being exposed in at least one region which adjoins the throttle gap, for the configuration of a discharge channel for the discharge of fluid.

6. The hydraulic throttle apparatus according to one of the preceding claims, the rotary seal (8) being arranged in the radial direction between the throttle device (10) and the second component (5).

7. The hydraulic throttle apparatus (1; 40) according to one of the preceding claims, the rotary seal (8) being configured as a radial sealing ring or as an arrangement of a plurality of radial sealing rings.

8. The hydraulic throttle apparatus (1; 40) according to one of the preceding claims, the throttle device (10)
a) being arranged fixedly on the first component (4) for conjoint rotation by means of an anti-rotation safeguard (7); and/or
b) being sealed towards the first component (4) by means of a seal (9) which is arranged between the throttle device (10) and the first component (4), the seal preferably being a sealing ring.

9. The hydraulic throttle apparatus (1; 40) according to one of the preceding claims,
a) the first component (4) being a wheel hub (4a) or a component which is fastened fixedly to the wheel hub for conjoint rotation, and the second component (5) being an axle stub or a component which is fastened fixedly to the axle stub for conjoint rotation, preferably a sealing means carrier (5a) of the axle stub (6); or
b) the second component (5) being a wheel hub (4a) or a component which is fastened fixedly to the wheel hub for conjoint rotation, and the first component (4) being an axle stub or a component which is fastened fixedly to the axle stub for conjoint rotation, preferably a sealing means carrier (5a) of the axle stub (6).

10. The hydraulic throttle apparatus (1; 40) according to one of the preceding claims,
a) the throttle gap being configured as a fixed and/or rigid gap; and/or
b) the wall of the throttle gap being formed from an inelastic material, for example from a metallic material.

11. A hydrostatic wheel hub motor, comprising a hydraulic throttle apparatus (1; 40) according to one of the preceding claims.

12. A motor vehicle, preferably utility vehicle, comprising a hydraulic throttle apparatus (1; 40) according to one of the preceding claims.

## Revendications

1. Dispositif d'étranglement hydraulique (1 ; 40) pour un système d'étanchéité (2) d'un dispositif rotatif (3), de préférence pour un système d'étanchéité d'une partie de roue (3) dotée d'un moteur sur moyeu de roue hydrostatique, le dispositif rotatif (3) comprenant une première et une deuxième pièce (4, 5) qui peuvent tourner l'une par rapport à l'autre autour d'un axe de rotation (D), comprenant
un élément d'étranglement hydraulique (10) disposé de manière verrouillée en rotation sur la première pièce (4) et présentant une fente d'étranglement (11) dont la paroi inférieure (11a) et supérieure (11b), vues dans la direction radiale (R) de l'axe de rotation (D), sont disposées de manière verrouillée en rotation l'une par rapport à l'autre et sont formées par l'élément d'étranglement (10) ; et
au moins un joint rotatif (8) qui rend étanche l'élément d'étranglement (10) par rapport à la deuxième pièce (5), pouvant tourner par rapport à l'élément d'étranglement (10), du dispositif rotatif (3).

2. Dispositif d'étranglement hydraulique (1 ; 40) selon la revendication 1, dans lequel l'élément d'étranglement (10) présente deux composants (13, 14) disposés de manière verrouillée en rotation l'un par rapport à l'autre et coaxialement à l'axe de rotation, et la paroi supérieure (11b) de la fente d'étranglement (11) est formée par une première surface extérieure du premier composant (13), et la paroi inférieure (11a) est formée par une deuxième surface extérieure du deuxième composant (14) espacée de la première surface extérieure dans la direction radiale.

3. Dispositif d'étranglement hydraulique (1 ; 40) selon la revendication 2,
a) dans lequel les deux composants (13, 14) de l'élément d'étranglement (10) sont réalisés en forme de bague, de préférence comme des bagues métalliques disposées de manière concentrique ; et/ou
b) dans lequel la fente d'étranglement (11) est réalisée comme une fente annulaire rigide ou une fente annulaire partielle rigide.

4. Dispositif d'étranglement hydraulique (1, 40) selon la revendication 2 ou 3,
a) dans lequel les deux composants (13, 14) de l'élément d'étranglement sont reliés l'un à l'autre de manière verrouillée en rotation au moyen d'un ajustage serré ; et/ou
b) dans lequel, pour réaliser la protection anti-torsion entre le premier et le deuxième composant (13, 14), le premier composant (13) de l'élément d'étranglement (10) vient en prise par une saillie rapportée à la première surface extérieure dans la direction axiale (A), de préférence par un bec de serrage (15), dans une gorge (16) qui est rapportée à la deuxième surface extérieure du deuxième composant (14) dans la direction axiale (A).

5. Dispositif d'étranglement hydraulique (1 ; 40) selon l'une quelconque des revendications 2 à 4, dans lequel, pour réaliser la protection anti-rotation entre les deux composants de l'élément d'étranglement (10), une protection anti-torsion est exposée dans au moins une zone adjacente à la fente d'étranglement pour réaliser un canal d'évacuation pour évacuer un fluide.

6. Dispositif d'étranglement hydraulique selon l'une quelconque des revendications précédentes, dans lequel le joint rotatif (8) est disposé dans la direction radiale entre l'élément d'étranglement (10) et la deuxième pièce (5).

7. Dispositif d'étranglement hydraulique (1 ; 40) selon l'une quelconque des revendications précédentes, dans lequel le joint rotatif (8) est réalisé sous la forme d'une bague d'étanchéité radiale ou d'un agencement de plusieurs bagues d'étanchéité radiales.

8. Dispositif d'étranglement hydraulique (1 ; 40) selon l'une quelconque des revendications précédentes, dans lequel l'élément d'étranglement (10)
a) est disposé de manière verrouillée en rotation sur la première pièce (4) au moyen d'une protection anti-torsion (7) ; et/ou
b) est rendu étanche par rapport à la première pièce (4) au moyen d'un joint (9) disposé entre l'élément d'étranglement (10) et la première pièce (4), le joint étant de préférence une bague d'étanchéité.

9. Dispositif d'étranglement hydraulique (1 ; 40) selon l'une quelconque des revendications précédentes, dans lequel
a) la première pièce (4) est un moyeu de roue (4a) ou une pièce fixée de manière verrouillée en rotation au moyeu de roue, et la deuxième pièce (5) est un tourillon ou une pièce fixée de manière verrouillée en rotation sur le tourillon, de préférence un support d'agent d'étanchéité (5a) du tourillon (6) ; ou
b) la deuxième pièce (5) est un moyeu de roue (4a) ou une pièce fixée de manière verrouillée en rotation au moyeu de roue, et la première pièce (4) est un tourillon ou une pièce fixée de manière verrouillée en rotation au tourillon, de préférence un support d'agent d'étanchéité (5a) du tourillon (6).

10. Dispositif d'étranglement hydraulique (1 ; 40) selon l'une quelconque des revendications précédentes, dans lequel
a) la fente d'étranglement est réalisée comme une fente fixe et/ou rigide ; et/ou
b) la paroi de la fente d'étranglement est formée en un matériau non élastique, par exemple un matériau métallique.

11. Moteur de moyeu de roue hydrostatique, comprenant un dispositif d'étranglement hydraulique (1 ; 40) selon l'une quelconque des revendications précédentes.

12. Véhicule automobile, en particulier véhicule utilitaire, comprenant un dispositif d'étranglement hydraulique (1 ; 40) selon l'une quelconque des revendications précédentes.
